# FASCICULE DE BREVET EUROPEEN

(11) **EP 0 482 974 B1**
(45) Date de publication et mention de la délivrance du brevet: **05.07.1995**
(21) Numéro de dépôt: 91402606.7
(22) Date de dépôt: 30.09.1991
(51) Int. Cl.: F16J 15/10, B62D 25/08, B60J 10/00, B60R 13/06

(54) **Joint d'étanchéité du compartiment moteur d'un véhicule automobile**
Fahrzeug-Motorraumdichtung
Motor vehicle engine compartment seal

(30) Priorité: 25.10.1990 FR 9013254
(43) Date de publication de la demande: 29.04.1992
(73) Titulaire: AUTOMOBILES PEUGEOT, 75116 Paris (FR); AUTOMOBILES CITROEN, 92200 Neuilly-sur-Seine (FR)
(72) Inventeur: Vuillemey, Christian, F-70400 Hericourt (FR)
(74) Mandataire: Durand, Yves Armand Louis

(56) Documents cités:
- EP-A- 255 218
- EP-A- 0 191 381
- EP-A- 0 336 786
- DE-A- 2 210 178
- DE-A- 3 629 343
- DE-B- 1 160 320
- DE-B- 2 256 298
- FR-A- 1 197 127
- FR-A- 2 614 849

## Description

La présente invention concerne un joint d'étanchéité du compartiment moteur d'un véhicule automobile.

On a pu observer que dans les véhicules automobiles, la fixation des conduits d'alimentation, tels les conduits de passage d'un fluide ou bien les conduits électriques, qui se trouvent souvent à proximité de joints d'étanchéité, est réalisée au moyen de brides ou analogues. Or, ce mode de fixation présente un certain nombre d'inconvénients, qui sont dus principalement à l'incertitude du trajet suivi par les conduits entre les brides. Ce caractère aléatoire du trajet confère à l'ensemble un aspect peu esthétique et ne permet pas d'obtenir une fiabilité suffisante de la fixation, compte-tenu notamment des risques d'endommagement, par pincements ou autres, des conduits lors des débattements des pièces qui se trouvent dans leur voisinage.

Le document FR-A-1 197 127 concerne une antenne pour ondes électromagnétiques destinée à être montée sur un véhicule automobile. L'antenne comprend un élément conducteur continu logé dans un bourrelet de caoutchouc formant la partie extérieure d'un joint encadrant une glace du véhicule et assurant la liaison étanche entre celle-ci et la carrosserie du véhicule. Le bourrelet en caoutchouc est évidé dans le sens de sa longueur par un canal dans lequel l'antenne est enfilée.

Le document EP-A-0 255 218 concerne une glace à bord enrobé, notamment pour véhicule automobile. Un fil conducteur radio peut être moulé dans l'enrobage entourant la glace. L'enrobage peut également comprendre un conduit interne qui est raccordé par un embranchement à une buse de sortie pour délivrer une eau de lavage par exemple sur le pare-brise du véhicule.

Le document DE-A-2 210 178 concerne un dispositif de lavage de glace, notamment pour un pare-brise de véhicule automobile comportant un enjoliveur à profil creux fixé à l'extérieur d'une bordure d'étanchéité entourant le pare-brise, ledit enjoliveur étant pourvu d'une buse de projection d'eau vers le pare-brise.

Tous ces documents ne révèlent que des conduits d'alimentation prévus dans ou fixés sur les joints d'étanchéité entourant les glaces d'un véhicule automobile.

On connaît, d'autre part, du document DE-A-22 56 298 un joint de compartiment moteur de véhicule, disposé entre ce compartiment et son capot de protection.

La présente invention propose un joint d'étanchéité de compartiment moteur permettant de fixer des conduits d'alimentation se trouvant à proximité, de façon particulièrement économique, esthétique et fiable.

A cet effet, la présente invention a pour objet un joint d'étanchéité du compartiment moteur d'un véhicule automobile, interposé entre le capot et le compartiment moteur du véhicule, ce joint étant caractérisé en ce qu'il comporte un conduit intégré au joint et s'étendant parallèlement à sa direction longitudinale.

On remarque déjà que grâce à l'invention, on évite avantageusement l'utilisation d'éléments de fixation, tels les brides ou analogues, d'où il résulte une diminution de coût de fabrication de l'ensemble et du temps de montage. En outre, les conduits étant maintenus sur une grande partie de leur longueur, leur trajet est parfaitement défini, ceci se traduisant par une diminution des risques de déplacement intempestifs des conduits, et des risques de pincement ou détérioration occasionnés par les pièces en mouvement qui se trouvent à proximité.

Suivant une réalisation particulière de l'invention, le conduit précité vient de moulage avec ledit joint.

Suivant une autre caractéristique de l'invention, le conduit précité est extérieur ou intérieur au joint. La réalisation d'un tel conduit à l'intérieur du joint permet d'améliorer encore l'esthétique de l'ensemble et la fiabilité de la fixation.

Le conduit est ouvert ou fermé ; un conduit ouvert peut être en forme de canal pour servir de support et de maintien en position par exemple à des conduits d'alimentation.

Suivant encore une autre caractéristique de l'invention, le joint d'étanchéité est constitué par un bourrelet et une lèvre, le conduit précité étant intégré audit bourrelet, à l'extérieur ou à l'intérieur de ce bourrelet.

Le conduit précité peut alimenter au moins un gicleur permettant le lavage des vitres du véhicule.

On précisera encore que le conduit précité est réalisé en au moins deux parties, pour permettre le montage d'un raccord, par exemple en forme T, ce qui permet par exemple le raccordement du conduit au gicleur précité.

On notera que le conduit d'alimentation peut contenir un faisceau de câbles.

Mais d'autres avantages et caractéristiques de l'invention, apparaîtront mieux à partir de la description détaillée qui suit et se réfère aux dessins annexés, donnés uniquement à titre d'exemples, et dans lesquels.

La figure 1 est une vue de côté du joint d'étanchéité et de son conduit associé.

Les figures 2 et 3 sont des vues similaires de deux formes de réalisation différentes du conduit d'alimentation associé au joint d'étanchéité.

La figure 4 est une vue partielle de dessus, d'un véhicule automobile équipé, entre son capot et son compartiment moteur, d'un joint d'étanchéité à conduit intégré, ledit conduit étant destiné à l'alimentation des gicleurs des dispositifs de nettoyage des vitre.

La figure 5 est une vue en coupe suivant la ligne V-V de la figure 4, illustrant la forme du joint d'étanchéité à conduit intégré, comprimé entre le capot et le compartiment moteur, et le raccordement dudit conduit au gicleur.

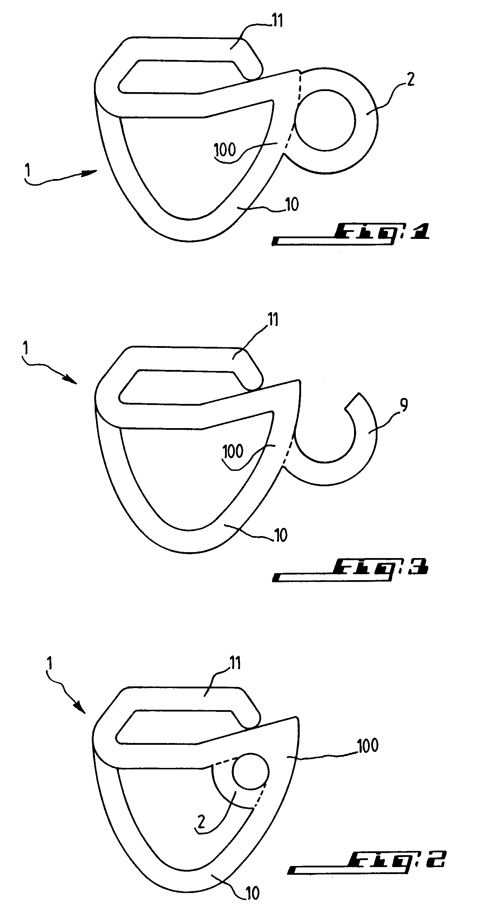

En se reportant à la figure 1, on observe un joint d'étanchéité 1 du compartiment moteur d'un véhicule automobile, formé d'une partie inférieure formant bourrelet 10 présentant une section transversale en forme de U, et d'une lèvre 11 reliée à la partie supérieure 100 du bourrelet 10. Au niveau de la jonction de la lèvre 11 et du bourrelet 10, et venu de fabrication avec ces derniers éléments, le conduit d'alimentation 2 s'étend parallèlement à la direction longitudinale du joint 1.

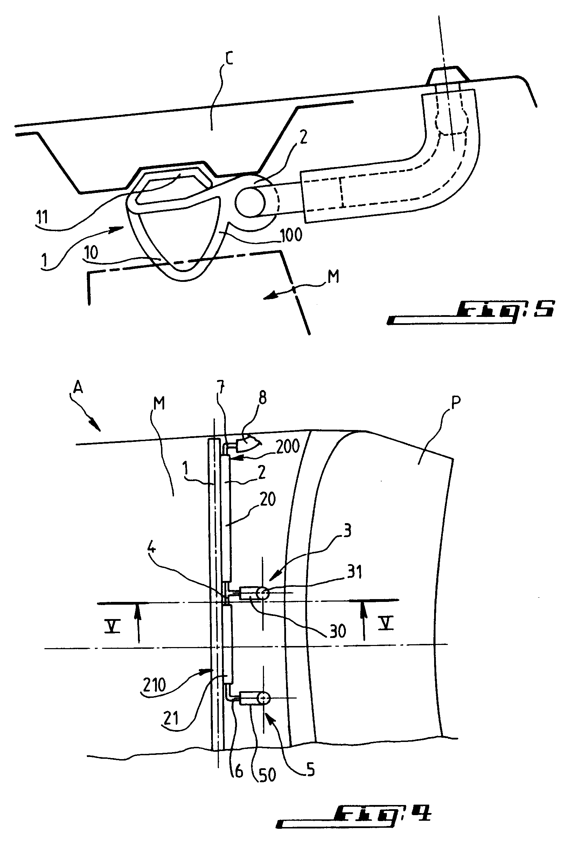

Sur la figure 2, le conduit d'alimentation 2 est constitué dans l'angle formé à la jonction de la lèvre 11 et du bourrelet 10 ; c'est-à-dire au niveau de la partie supérieure 100 de l'une des ailes du U formé par le bourrelet 10.

On pourra noter que cette forme de réalisation du joint d'étanchéité 1, permet par l'escamotage total du conduit d'alimentation 2 une amélioration notable de l'esthétique de l'ensemble, ainsi que la diminution de son encombrement et de la fragidité du conduit 2 se trouvant alors protégé contre les chocs.

Sur la figure 3, au joint d'étanchéité 1 est associé, venu de fabrication avec celui-ci, un élément en forme de canal 9, situé également au niveau de la jonction entre la lèvre 11 et le bourrelet 10. La fonction de cet élément en forme de canal 9 est de servir de support à un conduit d'alimentation (non représenté). Il est bien entendu qu'un tel élément peut supporter divers types de conduits et qu'il peut être associé à d'autres types de joints d'étanchéité.

En se reportant aux figures 4 et 5, on voit la partie avant droite A d'un véhicule automobile, et plus particulièrement, l'emplacement du compartiment moteur M et le pare-brise avant P, le capot du véhicule ayant été relevé. De manière connue en soi dans un véhicule automobile, un joint d'étanchéité 1 est disposé entre le compartiment moteur M et son capot de protection (représenté en C sur la figure 5). A proximité de ce joint d'étanchéité 1, doit être fixé le conduit 2 destiné à acheminer le liquide "lave-vitre" en provenance d'un réservoir (non représenté) en direction des gicleurs 3, 5 des dispositifs assurant la projection de liquide sur le pare-brise P. En se reportant plus particulièrement à la figure 5, on voit que le bourrelet 10 est fixé dans le compartiment moteur M, la lèvre 11 se logeant dans un évidement de forme correspondante, prévu dans la surface interne du capot C.

Conformément à l'invention, le conduit précité 2 fait partie intégrante du joint d'étanchéité 1 qui assure ainsi son maintien en position. Dans cette réalisation particulière, le conduit d'alimentation 2 est bipartite et est formé le long du joint d'étanchéité 1, de façon à ce que les directions longitudinales respectives du conduit 2 et du joint 1 soient parallèles. Disposées bout à bout le long du joint d'étanchéité 1, les deux parties 20, 21 du conduit précité 2 laissent apparaître entre elles un espace destiné au logement d'une conduite de raccordement 4 en forme de T. Et les deux extrémités opposées de cette conduite 4 sont emmanchées respectivement dans les deux extrémités en vis à vis des deux parties 20, 21 du conduit d'alimentation 2, alors que la troisième extrémité de cette conduite de raccordement 4 est emmanchée dans une conduite 30 directement reliée à la bille 31 de l'un des gicleurs 3. Le second gicleur 5 est relié au conduit d'alimentation 2 par l'intermédiaire d'un raccord coudé 6 dont les deux extrémités sont emmanchées respectivement sur l'une des extrémités de la conduite 50 du gicleur 5 et sur l'une 210 des extrémités de la partie 21 de la conduite d'alimentation 2, tandis que l'extrémité 200 de la partie 20 de conduite 2 est reliée par un autre raccord coudé 7 à la conduite d'amenée du liquide 8.

Ainsi, bien que l'exemple qui vient d'être décrit s'applique à un joint d'étanchéité associé à un conduit d'alimentation en liquide du nettoyage, il convient de noter que le conduit d'alimentation pourrait être constitué d'un ensemble de conduits, tel un ensemble de câbles électriques par exemple. Et que, de la même manière, l'invention pourrait s'appliquer à tout conduit d'alimentation avoisinant un joint d'étanchéité présentant une forme adéquate pour que l'intégration d'un conduit soit réalisable.

Il est à noter, et ceci est visible sur les figures, que le conduit d'alimentation n'est pas nécessairement formé sur toute la longueur du joint.

Le profilé qui a été décrit précédemment peut être réalisé par exemple en élastomère, par extrusion, et peut comporter des inclusions métalliques. Les différents éléments le constituant peuvent être formés de différents matériaux. On pourra prévoir par exemple une lèvre et un conduit réalisés en un élastomère compact, et le bourrelet réalisé en un élastomère cellulaire.

Le joint d'étanchéité prendra différentes formes. La lèvre pourra par exemple présenter une forme en U afin de permettre l'accrochage du joint d'étanchéité sur une pièce du véhicule, telle une tôle de carrosserie.

On a donc réalisé suivant l'invention un joint d'étanchéité particulièrement économique, puisqu'il permet de supprimer les moyens de fixation classiques, d'un conduit d'alimentation de véhicule automobile. Il en résulte une fixation et un maintien en position plus fiables et que les risques d'altération en sont considérablement réduits. En outre, le conduit d'alimentation intégré au joint est moins exposé aux débattements des pièces se trouvant à proximité et présente donc une plus grande solidité.

Bien que l'esthétique de l'ensemble soit déjà amélioré grâce à la réalisation d'un joint d'étanchéité à conduit intégré à l'extérieur dudit joint, il est néanmoins possible de rendre l'ensemble encore plus esthétique et moins encombrant en réalisant le joint d'étanchéité selon la seconde forme de réalisation décrite, qui consiste à intégrer le conduit d'alimentation dans la partie intérieure du joint.

Bien entendu l'invention n'est nullement limitée aux modes de réalisation décrits et illustrés qui n'ont été donnés qu'à titre d'exemple.

## Revendications

1. Joint d'étanchéité du compartiment moteur d'un véhicule automobile, interposé entre le capot (C) et le compartiment moteur (M) du véhicule caractérisé en ce qu'il comporte un conduit (2, 9) intégré au joint (1) et s'étendant parallèlement à sa direction longitudinale.

2. Joint d'étanchéité selon la revendication 1, caractérisé en ce que le conduit précité (2, 9) alimente au moins un gicleur (3, 5) de lavage des vitres du véhicule.

3. Joint d'étanchéité selon la revendication 1, caractérisé en ce que le conduit (2, 9) contient un faisceau de câbles.

4. Joint d'étanchéité selon l'une quelconque des revendications précédentes, caractérisé en ce que le conduit précité (2, 9) est extérieur au joint (1).

5. Joint d'étanchéité selon la revendication 4, caractérisé en ce que le conduit (9) est ouvert en forme de canal pour servir de support à un conduit d'alimentation.

6. Joint d'étanchéité selon les revendications 2 et 4 prises en combinaison, caractérisé en ce que le conduit précité (2) est réalisé en au moins deux parties (20, 21) pour permettre le montage d'un raccord (4) par exemple en forme de (T), reliant le conduit (2) au gicleur précité (3, 5).

7. Joint d'étanchéité selon l'une quelconque des revendications précédentes, caractérisé en ce que le conduit précité (2, 9) vient de moulage avec ledit joint (1).

8. Joint d'étanchéité selon l'une quelconque des revendications 1 à 3, caractérisé en ce qu'il est constitué par un bourrelet (10) et une lèvre (11), le conduit précité (2) étant intégré audit bourrelet (10), a l'extérieur ou l'intérieur de ce bourrelet (10).

9. Joint d'étanchéité selon la revendication 8, caractérisé en ce que le conduit (2) est intérieur au joint (1), à la jonction de la lèvre (11) et du bourrelet (10).

10. Joint d'étanchéité selon l'une des revendications 1 à 4, caractérisé en ce que le conduit (2) est fermé.

## Claims

1. Fluid-tight sealing joint of the engine compartment of an automotive vehicle interposed between the hood (C) and the engine compartment (M) of the vehicle, characterized in that it comprises a duct (2, 9) integrated into the seal (1) and extending in parallel relation to its longitudinal direction.

2. Fluid-tight sealing joint according to claim 1, characterized in that the aforesaid duct (2, 9) feeds at least one spray nozzle (3, 5) for washing the window panes of the vehicle.

3. Fluid-tight sealing joint according to claim 1, characterized in that the duct (2, 9) contains a bundle of cables.

4. Fluid-tight sealing joint according to any one of the foregoing claims, characterized in that the aforesaid duct (2, 9) is outside of the sealing joint (1).

5. Fluid-tight sealing joint according to claim 4, characterized in that the duct (9) is open in the shape of a channel to serve as a support for a supply duct.

6. Fluid-tight sealing joint according to claims 2 and 4 taken in combination, characterized in that the aforesaid duct (2) is made in at least two parts (20, 21) to permit the mounting of a for example T-shaped connector (4) connecting the duct (2) to the aforesaid spray nozzle (3, 5).

7. Fluid-tight sealing joint according to any one of the foregoing claims, characterized in that the aforesaid duct (2, 9) is made integral through molding with the said sealing joint (1).

8. Fluid-tight sealing joint according to any one of claims 1 to 3, characterized in that it is constituted by a bead (10) and a lip (11), the aforesaid duct (2) being integrated into the said bead (10) outside or inside of this bead (10).

9. Fluid-tight sealing joint according to claim 8, characterized in that the duct (2) is inside of the sealing joint (1) at the junction of the lip (11) and of the bead (10).

10. Fluid-tight sealing joint according to one of claims 1 to 4, characterized in that the duct (2) is closed.

## Patentansprüche

1. Dichtung des Motorenraumes eines Kraftfahrzeuges, die zwischen der Haube (C) und dem Motorenraum (M) des Fahrzeuges zwischengefügt ist, dadurch gekennzeichnet, dass sie einen in der Dichtung (1) einverleibten und sich parallel zu ihrer Längsrichtung erstreckenden Kanal (2, 9) aufweist.

2. Dichtung gemäss Anspruch 1, dadurch gekennzeichnet, dass der vorgenannte Kanal (2, 9) wenigstens eine Spritzdüse (3, 5) zum Waschen der Fensterscheiben des Fahrzeuges speist.

3. Dichtung nach Anspruch 1, dadurch gekennzeichnet, dass der Kanal (2, 9) ein Bündel von Kabeln enthält.

4. Dichtung nach irgendeinem der vorangehenden Ansprüche, dadurch gekennzeichnet, dass der vorgenannte Kanal (2, 9) ausserhalb der Dichtung (1) ist.

5. Dichtung nach Anspruch 4, dadurch gekennzeichnet, dass der Kanal (9) rinnenförmig offen ist, um als Halterung für einen Speisekanal zu dienen.

6. Dichtung gemäss den in Verbindung genommenen Ansprüchen 2 und 4, dadurch gekennzeichnet, dass der vorgenannte Kanal (2) aus wenigstens zwei Teilen (20, 21) hergestellt ist, um die Anordnung eines z.B. T-förmigen, den Kanal (2) mit der vorgenannten Spritzdüse (3, 5) verbindenden Anschlußstückes (4) zu gestatten.

7. Dichtung nach irgendeinem der vorangehenden Ansprüche, dadurch gekennzeichnet, dass der vorgenannte Kanal (2, 9) mit der besagten Dichtung (1) durch Formgiessen einstückig gebildet ist.

8. Dichtung nach irgendeinem der Ansprüche 1 bis 3, dadurch gekennzeichnet, dass sie durch einen Wulst (10) und eine Lippe (11) gebildet wird, wobei der vorgenannte Kanal (2) an dem besagten Wulst (10) ausserhalb oder innerhalb dieses Wulstes (10) eingegliedert ist.

9. Dichtung nach Anspruch 8, dadurch gekennzeichnet, dass der Kanal (2) innerhalb der Dichtung (1) am Anschluss der Lippe (11) und des Wulstes (10) liegt.

10. Dichtung nach einem der Ansprüche 1 bis 4, dadurch gekennzeichnet, dass der Kanal (2) geschlossen ist.
